# FASCICULE DE BREVET EUROPEEN

(11) **EP 1 559 692 B1**
(45) Date de publication et mention de la délivrance du brevet: **17.10.2007**
(21) Numéro de dépôt: 04100340.1
(22) Date de dépôt: 30.01.2004
(51) Int. Cl.: C03C 8/04, C03C 8/14

(54) **Vitrage emaille recyclable**
Wiederverwertbare emaillierte Verglasungen
Recyclable enamelled glazing

(43) Date de publication de la demande: 03.08.2005
(73) Titulaire: GLAVERBEL, 1170 Bruxelles (Watermael-Boitsfort) (BE)
(72) Inventeur: Lucca, M. Nério c/o GLaverbel Centre R&D, 6040 Jumet (BE); Dieu, Véronique C/o Glaverbel Centre R&D, 6040 Jumet (BE); van den Neste, Marc. c/o Glaverbel Centre R&D, 6040 Jumet (BE)
(74) Mandataire: Le Vaguerèse, Sylvain Jacques

(56) Documents cités:
- EP-A- 1 067 100

## Description

La présente invention concerne les vitrages émaillés, notamment les vitrages automobiles comportant des motifs émaillés. Plus précisément l'invention vise des vitrages de ce type et, pour ceux destinés à l'automobile, qui satisfont à toutes les exigences des constructeurs automobiles, vitrages qui, par ailleurs, peuvent être recyclés dans les fours de fusion de production du verre, et notamment ceux utilisés pour la production de verre plat, considérés comme ceux dont les conditions de fonctionnement sont les plus contraignantes.

La réglementation en matière de recyclage des constituants des véhicules conduit à considérer des problèmes nouveaux. Les vitrages automobiles soulèvent en particulier des problèmes liés à la présence de couches émaillées. Les parties émaillées sont destinées notamment à protéger les adhésifs de fixation contre la dégradation par les rayons UV, ou à masquer des éléments fonctionnels tels que les alimentations électriques, les supports de rétroviseurs etc.

Le recyclage dans les fours de production de verre plat soulève des questions tant en ce qui concerne les modifications de composition et de propriétés du verre que ce recyclage peut induire, que pour le bon fonctionnement du four lui-même.

Dans la détermination des qualités nécessaires des émaux utilisés sur ces vitrages destinés à être recyclés, les inventeurs ont d'abord recherché à évaluer la quantité d'émail introduite avec le verre recyclé. Pour l'ensemble des vitrages d'un véhicule, la quantité d'émail est de l'ordre de 50g, ou moins. Cette valeur est donnée pour un véhicule moyen ne comportant pas un toit en verre portant des motifs émaillés. Dans l'hypothèse d'un toit de cette nature, compte tenu des surfaces importantes qui peuvent être revêtues, la quantité d'émail peut aller jusqu'à être doublée.

En première approximation la teneur en émail par rapport à l'ensemble du verre recyclé représente de l'ordre de 1000ppm. La part des pigments et de la fritte constituant l'émail est respectivement de l'ordre de 10 à 30% de pigment pour 90 à 70% en poids de fritte et le plus souvent respectivement environ 25% de pigment pour environ 75% de fritte.

Ces proportions interviennent de manière directe sur la quantité et la nature des éléments qui peuvent entrer dans la composition des émaux utilisés, sachant que ceux-ci doivent satisfaire à différentes conditions, celles liées à la production du verre dans lequel les vitrages sont recyclés, mais aussi aux qualités requises de la part des constructeurs pour ces vitrages émaillés.

Le caractère recyclable requiert tout d'abord que les verres et en conséquence les émaux qu'ils portent soient exempts d'éléments non autorisés car toxiques. C'est le cas particulièrement du Pb autrefois abondamment utilisé dans la fritte de l'émail pour minimiser la température de fusion. De la même façon, l'utilisation de Cd est entièrement prohibée.

L'introduction du verre recyclé et de l'émail qu'il porte ne doit pas conduire à des colorations indésirables du verre produit. Par exemple les inventeurs ont constaté au cours de leurs essais que le Bi de l'émail des verres recyclés est réduit dans l'atmosphère du "float", et conduit en surface à une coloration brune. Pour cette raison les compositions d'émail ne doivent pas contenir une quantité importante de Bi. Cet élément a été proposé en effet dans de nombreuses compositions de fritte antérieures pour se substituer au plomb pour abaisser le point de fusion.

Le fer comme colorant est présent dans tous les verres usuels dans des proportions variables. Dans la fabrication de verres plats, les produits recyclés doivent être à teneur limitée en fer, même si le fer constitue un élément significatif entrant dans la composition des pigments utilisés selon l'invention compte tenu de son fort pouvoir colorant.

Les composants de l'émail ne doivent pas avoir d'interaction excessive avec les réfractaires qui revêtent le four, ou avec les outils de manutention du verre. Les composants des émaux ne doivent en particulier pas conduire à la formation de métaux susceptibles de corroder les réfractaires. Les métaux facilement réduits comme l'Ag, lorsqu'ils sont présents, doivent être en conséquence en quantité très limitée.

L'oxyde de bore est un autre constituant usuellement proposé pour abaisser la température de fusion des frittes. Il constitue cependant un élément extrêmement corrosif pour les parties émergées des réfractaires, et ce d'autant plus qu'il est extrêmement volatile.

Pour les mêmes raisons les fluorures qui sont des constituants extrêmement corrosifs pour les réfractaires doivent être en quantité bien maîtrisée dans les produits recyclés.

En raison de la formation possible de sulfures de Ni lorsque les verres contiennent également du soufre, la présence de Ni n'est pas souhaitable non plus. Les particules de sulfure de nickel engendrent en effet des casses spontanées quand les vitrages contenant ces sulfures sont soumis à un traitement thermique.

Il ne suffit pas que les vitrages puissent être recyclés. Il faut bien évidemment que dans leur application toutes les qualités recherchées soient satisfaites.

En particulier les émaux doivent être faciles à appliquer suivant les techniques habituelles, notamment par sérigraphie, ou par jet d'encre. Ils doivent être relativement faciles à traiter, notamment ils doivent être fusibles aux températures usuelles pour les opérations thermiques auxquelles ils sont soumis, notamment au cours des opérations de bombage-trempe, tout en ne donnant pas lieu à des difficultés de "collage" entre les feuilles de verre superposées dans ces opérations. Ils doivent présenter une opacité satisfaisante sous les faibles épaisseurs mises en oeuvre. Ils doivent être résistants aux agressions chimiques ou mécaniques usuelles. Ils ne doivent pas amoindrir de manière gênante la résistance des vitrages sur lesquels ils sont appliqués.

La formation de frittes à base d'oxydes métalliques est bien connue, et conduit à une grande variété de compositions. Le verre en poudre, connu comme fritte, peut être préparé en refroidissant rapidement du verre fondu, habituellement en versant du verre fondu dans un bain d'eau, en récupérant les granulés du verre obtenus, et broyant à la dimension des particules désirées. Les frittes sont utilisées comme un composant fondant dans les mélanges avec des pigments céramiques; un tel mélange est appelé émail. L'émail peut être appliqué comme décor artistique ou utilitaire aux substrats capables de supporter la cuisson, ou traitement thermique, aux températures de fusion de la fritte. Ces substrats incluent des céramiques de toutes natures, des surfaces métalliques, céramiques vitreuses. L'émail est appliqué sous forme d'une composition fluide d'émail mélangée avec un moyen de suspension liquide, notamment un moyen organique volatil, pour former le plus souvent une encre appliquée par sérigraphie sur le substrat. Les alternatives incluent l'application manuelle au pochoir, et les applications mécaniques comme l'impression "offset". Une variante d'application est le mode par transfert après application sur papier, papier par exemple encollé, former une décalcomanie, et la décalcomanie est appliquée au substrat. Les spécialistes désignent par pigment céramique, un pigment qui est stable à la température à laquelle l'émail est cuit, c'est à dire la température de fusion des constituants de la fritte dans les conditions usuelles.

L'invention a pour objet des vitrages, notamment automobile, émaillés recyclables dans les fours traditionnels utilisés pour la production du verre plat silico-sodo-calcique. Les vitrages selon l'invention sont revêtus partiellement d'un émail dont les constituants sont choisis de telle sorte, en prenant comme référence une teneur en émail par rapport au verre recyclé qui n'excède pas 1000ppm, et pour un taux de recyclage de 10% de verre par rapport à la masse de verre fondue, qu'ils n'entraînent pas une modification de plus de 0,5% de la transmission lumineuse pour une feuille de verre de 4mm d'épaisseur, par rapport aux valeurs correspondantes du verre si le recyclage était conduit avec le même verre non émaillé.

Le choix des constituants de l'émail, pour les vitrages selon l'invention, toujours pour les mêmes conditions de recyclage, en mesurant les effets sur une feuille de verre de 4mm produite avec le verre incluant le verre recyclé, est aussi tel que la variation de longueur d'onde dominante n'est pas supérieure à 3nm, par rapport aux valeurs correspondantes du verre si le recyclage était conduit avec le même verre recyclé non émaillé.

Le choix des constituants, en particulier l'absence, ou quasi-absence, des composés susceptibles d'induire des modifications de ces paramètres est ce qui permet de parvenir à ce résultat. Des indications à ce sujet figurent déjà ci-dessus. Des exemples et conditions plus détaillés sont donnés dans la suite de la description.

Avantageusement les constituants de l'émail des vitrages recyclés sont en nature et proportions telles que, dans les conditions de recyclage indiquées précédemment, la variation de transmission lumineuse ne soit pas supérieure à 0,3% et la variation de longueur d'onde dominante pas supérieure à 2nm.

De la même façon le choix des constituants de l'émail du vitrage est, de préférence, tel que le recyclage des vitrages, toujours dans les conditions indiquées ci-dessus (10% de recyclage et au plus 1000ppm d'émail par rapport au verre recyclé) n'occasionne pas une modification du coefficient d'oxydo-réduction supérieure à 1%.

Le choix des constituants de l'émail des vitrages recyclés est encore de préférence tel que la variation de pureté d'excitation des couleurs du verre produit, ne soit pas supérieure à 0,4%.

Tous les facteurs précédents sont relatifs aux propriétés optiques des verres obtenus. Le choix de l'émail tient aussi compte de son influence sur les propriétés des vitrages sur lesquels il est appliqué. Les inventeurs ont ainsi montré que pour la résistance mécanique des vitrages, le choix de la composition de l'émail, et en particulier des constituants de la fritte doit encore conduire à un émail dont le coefficient d'expansion thermique doit être aussi voisin que possible de celui du verre sur lequel l'émail est appliqué. En pratique le coefficient d'expansion thermique du verre silico-sodo-calcique, le plus usuel pour le verre plat, est de l'ordre de 90x10⁻⁷/K. De préférence la composition d'émail, et plus particulièrement celle de la fritte est telle que l'émail présente un coefficient d'expansion thermique inférieur à celui du verre. Avantageusement ce coefficient est inférieur à 90x10⁻⁷/K.

L'émail des vitrages selon l'invention présente encore avantageusement une bonne résistance aux acides. Cette résistance mesurée selon la norme ASTM C724-91 est avantageusement au moins égale à 3.

Une composition de fritte qui est particulièrement adaptée pour former les émaux appliqués sur les vitrages recyclables selon l'invention comprend en poids 35-45% de SiO₂, 12-20% de B₂O₃, 10-16% de ZnO, 0-12% de Na₂O, 1-15% de K₂O, jusqu'à 2% de Li₂O, la somme Na₂O+K₂O+Li₂O étant de 10-15%, 8-18% de TiO₂, jusqu'à 2% de CaO, jusqu'à 1% de SrO et jusqu'à 5% de BaO, la somme CaO+ SrO+ BaO étant de 0,4 à 5%, et par ailleurs est essentiellement exempte de fluorure. Le total des composants dans tous les cas est de 100%.

La composition de la fritte peut encore comprendre de 0 à 3% de Al₂O₃, et de 0 à 5% de Bi₂O₃, mais de préférence est exempte de ce dernier.

La composition de la fritte peut contenir de petites quantités de composants supplémentaires, peut-être comme impuretés, l'ensemble de ces composants ne dépassant pas 2 %. Ces composants sont notamment ZrO₂, Fe₂O₃, MnO, MgO, SnO₂, La₂O₃, CeO₂, P₂O₅, V₂O₅ et le soufre.

De préférence la composition est exempte de SnO₂.

Pour améliorer la fusibilité de la composition de la fritte, de petites quantités de fluorures peuvent être présentes dans les matières premières. De préférence, cependant, la composition de la fritte est dépourvue de fluorures.

Les émaux appliqués sur les vitrages recyclables selon l'invention comprennent avantageusement au moins une fritte du type indiqué ci-dessus, et au moins un pigment céramique.

De préférence, l'émail ne contient pas de composants contraires aux conditions indiquées au préambule lorsque l'on envisage le recyclage.

Les pigments céramiques sont d'origines diverses. Pour l'usage préféré d'émaux recyclables, le choix de pigments est cependant restreint. Quand du verre automobile avec des motifs, ou du verre architectural à motifs, est recyclé, le pigment de l'émail est dissout dans le verre fondu. Les ions colorés des métaux de transition du pigment, sont incorporés dans le verre. Selon le type d'élément, son état d'oxydation et sa concentration, le pigment dissout contribue à l'absorption lumineuse du verre flotté obtenu. Des éléments tels que Cr, Co et Ni sont des éléments absorbants quel que soit leur état d*'*oxydation et ne sont pas souhaitables dans la composition. Cu peut être réduit en ions incolores tel que Cu(I), mais Cu(I) est instable et se transforme pour donner du Cu élémentaire colloïdal qui réduit la transmission lumineuse du verre. Par conséquent, la teneur en Cu dans les pigments doit également rester faible.

Les composés du fer sont normalement dans les matières premières pour la production de verre flotté. Aucun problème n'est à craindre si le pigment contient des composés du fer en quantité limitée.

Les ions du manganèse forment des verres colorés si l'état d'oxydation est supérieur à 2, alors que les ions Mn(II) contribuent un peu à l'absorption lumineuse. Les pigments qui contiennent des composés Mn ne causent pas de problèmes pour le recyclage.

Les oxydes de fer de valence mixte tels que la magnétite (voir par exemple DE 44 01 657) ou les pigments à base d'oxydes mixtes fer-manganèse sont connus pour former des émaux noirs, bien appropriés pour l'usage sur les vitrages automobile en raison notamment de leur grande opacité. Des pigments avec cette composition sont commercialement disponibles, par exemple celui commercialisé sous le nom Bayferrox 303, fabriqué par Bayer, ou le pigment Black 10G930, fabriqué par Shepherd Color Cy. La stabilité thermique des pigments de magnétite peut être améliorée en les enduisant avec une composition de verre (voir DE 195 25 658).

Les poudres d'émail sont faites par mélange à sec d'une poudre de la fritte avec un ou plusieurs pigment en poudre. De façon alternative le broyage humide simultané de la fritte avec le pigment peut être utilisé, la calcination d'un mélange fritte-pigment suivie d'un broyage peut aussi être utilisé pour faire la poudre d'émail. La quantité de pigment dans la poudre d'émail est typiquement de 10 à 30% en poids, de préférence de 15 à 25%.

Pour l'application sur verre, d'un émail tel que décrit précédemment pour constituer un vitrage recyclable selon l'invention, le mélange de fritte et de pigments est mis en suspension dans un médium convenable, par exemple un médium pour impression par sérigraphie pour constituer une encre d'impression.

L'encre peut être fabriquée en mélangeant les poudres de fritte et de pigment et en dispersant l'émail dans le médium choisi au moyen d'un broyeur à trois rouleaux ou par d'autres moyens tels qu'un broyeur à boulets ou mélangeur ultra-rapide. La pâte obtenue peut être diluée, si nécessaire. Typiquement la pâte pour impression par sérigraphie a une viscosité de 5 à 25 Pas (pour un module de cisaillement de 10s⁻¹).

Le médium pour préparer l'encre est commercialement disponible, par exemple auprès du groupe Johnson Matthey et peut être un médium séchable aux IR tel que ceux référencés: 650-63, 700-63 ou 702-63, un médium qui peut être traité aux UV tel que le 660-70 ou 724-70, ou un médium thermoplastique tel que le 64-64.

Des dimensions de grains adéquates pour la fritte de verre, exprimés en fraction comportant 90% des grains, d₉₀, sont de 6 à 18µm. Des dimensions de grains convenables pour le pigment sont de 1 à 10µm, de préférence de 1 à 5µm.

Les propriétés de l'encre peuvent être choisies d'après le mode d'application spécifique, le type de cuisson etc. par des essais de routine et optimisation. En général, l'encre peut être appliquée sur les vitrages automobile par sérigraphie, mais d'autres méthodes peuvent être utilisées. Par exemple, une encre convenant pour l'impression par jet d'encre peut être formulée selon l'enseignement de la demande de brevet du Royaume-Uni n° 0327340.6.

Les paramètres de l'impression convenables et les programmes de cuisson sont traditionnels.

La présente invention est maintenant décrite par référence aux exemples spécifiques suivants. Cependant, on comprend aisément que les détails peuvent être modifiés sans s'écarter des concepts de la présente invention.

Echantillons de frittes pour la préparation des émaux des vitrages recyclables selon l'invention Nos 1-11.

Les précurseurs appropriés sous forme d'oxydes, borates, fluorures, phosphates ou autres précurseurs convenables, sont mélangés, fondus approximativement à 1200°C pendant environ 1 à 1,5 heures, et coulés dans un courant d'eau froide pour former une fritte de verre. Le tableau 1 présente les compositions de frittes en % en poids. La fritte peut être broyée en poudre, par exemple dans un broyeur à boulets ou broyeur à jet. Les exemples 3 et 11 sont donnés pour comparaison et ne sont pas selon l'invention.

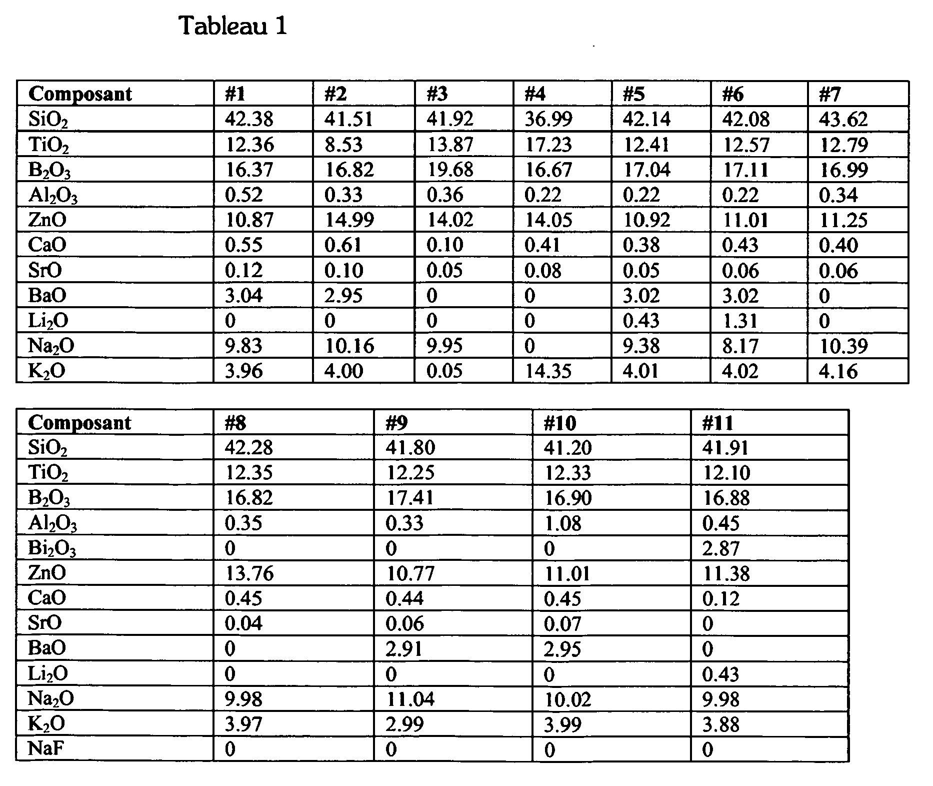

Les frittes ont été testées selon les méthodes traditionnelles pour déterminer leurs caractéristiques fonctionnelles les plus significatives pour l'application aux vitrages selon l'invention.

Les résultats sont présentés dans le Tableau 2

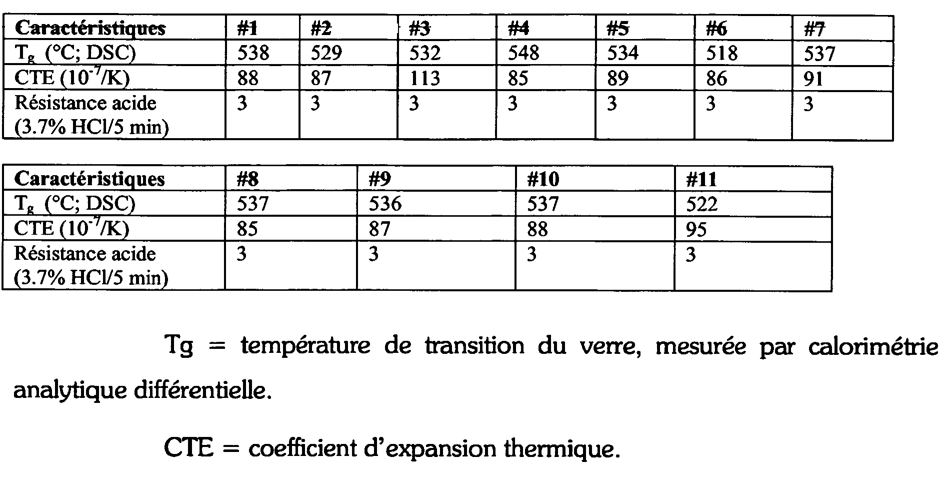

La résistance à l'acide a été mesurée d'après la norme ASTM C724-91 sur une échelle de 1 à 7, avec 1 correspondant à aucune attaque, et 7 à une dissolution totale.

Sur les résultats figurant dans le tableau 1 on constate que les frittes sont facilement fusibles, que leur coefficient d'expansion thermique est peu différent de celui du verre du substrat sur lequel l'émail est appliqué (et le plus souvent inférieur à celui-ci), et qu'elles présentent une bonne résistance à l'acide.

D'autres frittes utiles selon l'invention, Nos 12 à 15, ont été préparées. Les compositions sont données dans le tableau 3. La fritte 15 n'est pas en elle-même conforme à celles utilisées selon l'invention lorsqu'elle n'est pas modifiée par l'association avec d'autres constituants. Pour la formation de l'émail de l'exemple 4 du tableau 4, cette fritte est combinée avec la fritte 14 dans des proportions respectives telles que l'ensemble réponde aux conditions de l'invention.

**Tableau 3**

| Oxyde | Fritte #12 | Fritte #13 | Fritte #14 | Fritte #15 |
|---|---|---|---|---|
| SiO₂ | 42.0 | 42.2 | 42.3 | 40.6 |
| TiO₂ | 12.5 | 12.5 | 12.6 | 4.2 |
| Al₂O₃ | | 0.1 | | 2.6 |
| B₂O₃ | 17.0 | 17.0 | 17.1 | 12.8 |
| Bi₂O₃ | | | | 2.7 |
| V₂O₅ | | | | 1.1 |
| BaO | 3.0 | 3.0 | 3.0 | 2.4 |
| ZnO | 11.0 | 11.0 | 11.1 | 21.4 |
| CaO | 0.5 | 0.4 | 0.4 | |
| Li₂O | | 0.4 | 1.3 | |
| Na₂O | 10.0 | 9.4 | 8.2 | 11.0 |
| K₂O | 4.0 | 4.0 | 4.0 | 1.0 |

Les frittes Nos 12 à 15 ont été utilisées pour former les émaux Nos 1 à 4 présentés au tableau 4.

**Tableau 4**

| Composant | Exemple #1 | Exemple #2 | Exemple #3 | Exemple #4 |
|---|---|---|---|---|
| Fritte #12 | 0.75 | | | |
| Fritte #13 | | 0.75 | | |
| Fritte #14 | | | 0.75 | 0.375 |
| Fritte #15 | | | | 0.375 |
| Bayferrox | 0.16 | 0.16 | 0.16 | 0.16 |
| 1OG930 | 0.09 | 0.09 | 0.09 | 0.09 |

75 parties en poids d'une fritte de verre ou d'un mélange de frittes de verre selon invention (voir le tableau ci-dessus) sont mélangées avec 16 parties en poids de pigment noir Bayferrox 303 (Bayer AG) et 9 parties en poids de pigment Black 10G930 (Shepherd Color Cy). À 100 parties en poids de ce mélange de cette poudre, 25 parties en poids de médium de sérigraphie 650-63 (Johnson Matthey Verre) sont ajoutées. Après mélange intense, la pâte définitive est formée par broyage dans un broyeur à trois rouleaux et ajoutant du médium pour obtenir la viscosité désirée de 15 Pas.

Cette pâte est imprimée par sérigraphie sur une plaque de verre pour donner une couche humide de 25µm d'épaisseur, séchée à 120 °C et cuite à 680 °C pour donner une couche céramique bien fondue et non poreuse.

Les données suivantes ont été mesurées pour les échantillons d'émaux dont les compositions sont données dans le tableau 4.

**Tableau 5 Caractéristiques des émaux cuits**

| Cuisson sur échantillons 100 x 100 mm2 de verre clair (3 mm), le four à rouleaux à 680 °C, vitesse 150 (4,16 cm/min) | | | | | |
|---|---|---|---|---|---|
| Caractéristiques | | Exemple 1 | Exemple 2 | Exemple 3 | Exemple 4 |
| Cuisson à 680°C | | OK | OK | OK | OK |
| Couleur | L | 27.1 | 27.5 | 27.6 | 27.7 |
| | a | 0.6 | 0.6 | 0.6 | 0.0 |
| | b | 0.0 | -0.7 | -0.5 | 0.2 |
| | L* | 10.2 | 10.7 | 9.7 | 10,1 |
| | a* | 3.1 | 2.7 | 3.0 | 3.4 |
| | b* | 0.4 | -0.9 | -0.7 | 0.8 |
| "brillance" | | 56 | 57 | 42 | 82 |
| densité optique | | 3.1 | 3.2 | 3.1 | 3.3 |
| griffe 16N | | OK | OK | OK | OK |
| griffe 30N | | OK | OK | OK | OK |
| 0.1H₂SO₄/22°C/ 24 hours | | OK | OK | OK | OK |
| 0.1 N NaOH/ 22°C/24 h | | OK | OK | OK | OK |
| Résistance statique (N) | | 568 | 764 | 738 | 792 |

L'essai "griffe" est conduit sur un appareil "Scratch Boy" (Braive Instrument). Les lames utilisées sont de la Sté STANLEY, et sont référencées 11-300. Les poids 1kg et 3kg sont appliqués correspondant aux graduations 10 et 30N. Aucune griffure n'étant remarquée sur l'émail, le résultat est dit "OK".

L'essai d'attaque à l'acide H2SO4 comprend la réalisation avant et après immersion dans la solution indiquée et pendant 24h, d'un test "griffe" du type indiqué ci-dessus. EN l'absence de dégradation après immersion, le résultat est dit "OK". Le traitement est effectué avec la solution à base de NaOH.

La mesure de la résistance statique est faite selon la norme européenne EN 1288.

## Revendications

1. Vitrage automobile émaillé recyclable dans les fours de fusion de verre plat silico-sodo-calcique, dans lequel l'émail est destiné notamment à protéger les adhésifs de fixation contre la dégradation par les rayons UV, ou à masquer des éléments fonctionnels tels que les alimentations électriques, les supports de rétroviseurs etc, le choix de la composition des constituants de l'émail étant tel que, pour une teneur en émail par rapport au verre recyclé de 1000ppm et pour un taux de recyclage de 10% par rapport à la masse de verre fondue, le recyclage n'entraîne pas une modification de plus de 0,5% de la transmission lumineuse pour une feuille de verre d'une épaisseur de 4mm, , par rapport aux valeurs correspondantes pour le verre obtenu pour un recyclage du même verre sans émail.

2. Vitrage automobile recyclable selon la revendication 1 dans lequel le choix de la composition des constituants de l'émail est tel que le recyclage n'entraîne pas une variation de longueur d'onde dominante de plus de 3nm, par rapport aux valeurs correspondantes pour le verre obtenu pour un recyclage du même verre sans émail.

3. Vitrage selon la revendication 1 et la revendication 2 dans lequel la variation de transmission lumineuse est inférieure à 0,3% et la variation de longueur d'onde dominante est au plus égale à 2nm.

4. Vitrage selon l'une des revendications précédentes dans lequel le choix de la composition des constituants de l'émail est tel que la variation de coefficient d'oxydo-réduction du verre produit n'est pas supérieure à 1%.

5. Vitrage selon l'une des revendications précédentes dans lequel le choix de la composition des constituants de l'émail est tel que la variation de pureté de couleur du verre produit n'est pas supérieure à 0,4%.

6. Vitrage selon l'une des revendications précédentes dans lequel le choix de la composition des constituants de la fritte de l'émail est tel que le coefficient d'expansion thermique de la couche d'émail est inférieur à celui du verre sur lequel l'émail est appliqué.

7. Vitrage selon l'une des revendications précédentes dans lequel le choix de la composition des constituants de l'émail est tel que sa résistance à l'acide, mesurée selon la norme ASTM C724-91, n'est pas inférieure à 3.

8. Vitrage selon l'une des revendications précédentes comportant des parties revêtues d'une couche d'émail, dont la composition est choisie de manière à permettre le recyclage dans les fours de fusion du verre plat, la fritte de la composition d'émail comprenant en pourcentage en poids les constituants suivants:
| | |
|---|---|
| SiO₂ | 35 à 45 % |
| B₂O₃ | 12 à 20 % |
| ZnO | 10 à 16 % |
| Na₂O | 0-12 % |
| K₂O | 1-15 % |
| Li₂O | 0-2 % |
la somme Na₂O+K₂O+Li₂O étant de 10-15%,
| | |
|---|---|
| TiO₂ | 8 à 18 % |
| CaO | 0-2 % |
| SrO | 0-1 % |
| BaO | 0-5 % |
la somme CaO+SrO+BaO étant de 0,4 à 5%.

9. Vitrage selon la revendication 8 dans lequel la fritte entrant dans la composition de l'émail comprend également au moins l'un de Al₂O₃ à teneur allant jusqu'à 3%, et Bi₂O₃ à teneur allant jusqu'à 5 % en poids.

10. Vitrage selon l'une des revendications 8 et 9 dans lequel la fritte entrant dans la composition de l'émail ne contient chacun des constituants suivants qu'à une teneur aussi faible que possible, la teneur totale de ces constituants n'excédant pas 2 % en poids de la fritte : ZrO₂, Fe₂O₃, MnO, MgO, SnO₂, La₂O₃, CeO₂, P₂O₅, V₂O₅ et S.

11. Vitrage selon l'une des revendications 7 à 10 dans lequel la composition de l'émail est essentiellement exempte de fluor.

12. Vitrage selon l'une des revendications 7 à 11 dans lequel la composition de l'émail est essentiellement exempte de Bi₂O₃.

13. Vitrage selon l'une des revendications 7 à 12 dans lequel la composition de l'émail est essentiellement exempte de SnO₂.

14. Vitrage selon l'une des revendications 7 à 13 dans lequel la composition de l'émail comprend également des pigments représentant de 10 à 30 % en poids de l'émail.

15. Vitrage selon la revendication 14 dans lequel les pigments sont à base d'oxydes de fer.

16. Vitrage selon la revendication 15 dans lequel les pigments comprennent des oxydes mixtes de fer et de manganèse.

## Claims

1. Enamelled automotive glazing that is recyclable in the melting furnaces for soda-lime silica flat glass, in which the enamel is intended in particular to protect the fastening adhesives from degradation by uv radiation, or to conceal functional elements such as electric supply points, rear vision mirror supports etc., wherein the composition of the constituents of the enamel is selected such that with a content of enamel in relation to recycled glass of 1000 ppm and with a recycling rate of 10% in relation to the mass of melted glass, the recycling does not cause a modification of more than 0.5% to the light transmission for a glass sheet with a thickness of 4 mm in relation to the corresponding values for the glass obtained by recycling the same glass without enamel.

2. Recyclable automotive glazing according to Claim 1, wherein the composition of the constituents of the enamel is selected such that the recycling does not cause a variation in the dominant wavelength of more than 3 nm in relation to the corresponding values for the glass obtained by recycling the same glass without enamel.

3. Glazing according to Claim 1 and Claim 2, wherein the variation in light transmission is less than 0.3% and the variation in dominant wavelength is at most equal to 2 nm.

4. Glazing according to one of the preceding claims, wherein the composition of the constituents of the enamel is selected such that the variation in the oxidation-reduction coefficient of the glass produced is not more than 1%.

5. Glazing according to one of the preceding claims, wherein the composition of the constituents of the enamel is selected such that the variation in colour purity of the glass produced is not more than 0.4%.

6. Glazing according to one of the preceding claims, wherein the composition of the constituents of the frit of the enamel is selected such that the coefficient of thermal expansion of the enamel layer is less than that of the glass to which the enamel is applied.

7. Glazing according to one of the preceding claims, wherein the composition of the constituents of the enamel is selected such that its resistance to acid, measured in accordance with standard ASTM C724-91, is not less than 3.

8. Glazing according to one of the preceding claims comprising sections coated with an enamel layer, the composition of which is selected so as to allow recycling in the melting furnaces of the flat glass, the frit of the enamel composition comprising the following constituents in percentages by weight:
| | |
|---|---|
| SiO₂ | 35 to 45% |
| B₂O₃ | 12 to 20% |
| ZnO | 10 to 16% |
| Na₂O | 0-12% |
| K₂O | 1-15% |
| Li₂O | 0-2% |
the sum of Na₂O + K₂O + Li₂O being 10-15%,
| | |
|---|---|
| TiO₂ | 8 to 18% |
| CaO | 0-2% |
| SrO | 0-1% |
| BaO | 0-5% |
the sum of CaO + SrO + BaO being 0.4 to 5%.

9. Glazing according to Claim 8, wherein the frit used in the enamel composition also comprises at least one of Al₂O₃, with a content amounting to as much as 3%, and Bi₂O₃, with a content amounting to as much as 5% by weight.

10. Glazing according to one of Claims 8 and 9, wherein the frit used in the enamel composition only contains each of the following constituents with as low a content as possible, the total content of these constituents not exceeding 2% by weight of the frit: ZrO₂, Fe₂O₃, MnO, MgO, SnO₂, La₂O₃, CeO₂, P₂O₅, V₂O₅ and S.

11. Glazing according to one of Claims 7 to 10, wherein the composition of the enamel is essentially free from fluorine.

12. Glazing according to one of Claims 7 to 11, wherein the composition of the enamel is essentially free from Bi₂O₃.

13. Glazing according to one of Claims 7 to 12, wherein the composition of the enamel is essentially free from SnO₂.

14. Glazing according to one of Claims 7 to 13, wherein the composition of the enamel also comprises pigments representing 10 to 30% by weight of the enamel.

15. Glazing according to Claim 14, wherein the pigments are based on iron oxides.

16. Glazing according to Claim 15, wherein the pigments comprise mixed oxides of iron and manganese.

## Patentansprüche

1. Emaillierte Automobilverglasung, welche in Natrium-Calcium-Silicat-Flachglas-Schmelzöfen rezyklisierbar ist, in der die Beschichtung insbesondere vorgesehen ist, um die Fixierungshaftmittel gegen Verschlechterung durch UV-Strahlung zu schützen oder um die funktionellen Elemente, z.B. die elektrische Versorgung, die Träger von Rückspiegeln, etc., zu maskieren, wobei die Auswahl der Zusammensetzung der Inhaltsstoffe der Beschichtung derart ist, daß für einen Anteil der Beschichtung im Verhältnis zu dem rezyklisierten Glas von 1000 ppm und für eine Rezyklisierungsrate von 10% im Verhältnis zu der Masse an geschmolzenem Glas, die Rezyklisierung nicht eine Modifizierung der Lichttransmission von mehr als 0,5%, für eine Glasscheibe einer Dicke von 4 mm im Verhältnis zu entsprechenden Werten für das Glas, das für eine Rezyklisierung desselben Glases ohne Beschichtung erhalten wurde, mit sich bringt.

2. Rezyklisierbare Automobilverglasung nach Anspruch 1, in der die Auswahl der Zusammensetzung der Inhaltsstoffe der Beschichtung derart ist, daß die Rezyklisierung keine Variation der dominanten Wellenlänge von mehr als 3 nm im Verhältnis zu den entsprechenden Werten für ein Glas, welches für eine Rezyklisierung desselben Glases ohne Beschichtung erhalten wurde, mit sich bringt.

3. Verglasung nach Anspruch 1 und Anspruch 2, in der die Variation der Lichttransmission unter 0,3% ist und die Variation der dominanten Wellenlänge höchstens gleich 2 nm ist.

4. Verglasung nach einem der vorhergehenden Ansprüche, in der die Auswahl der Zusammensetzung der Inhaltsstoffe der Beschichtung derart ist, daß die Variation des Oxidations-Reduktions-Koeffizienten des hergestellten Glases nicht über 1 % ist.

5. Verglasung nach einem der vorhergehenden Ansprüche, in der die Auswahl der Zusammensetzung der Inhaltsstoffe der Beschichtung derart ist, daß die Variation der Farbreinheit des hergestellten Glases nicht über 0,4% ist.

6. Verglasung nach einem der vorhergehenden Ansprüche, in der die Auswahl der Zusammensetzung der Inhaltsstoffe der Fritte der Beschichtung, derart ist, daß der thermische Expansionskoeffizient der Beschichtungsschicht unter dem des Glases, auf dem die Beschichtung aufgebracht ist, liegt.

7. Verglasung nach einem der vorhergehenden Ansprüche, in der die Auswahl der Zusammensetzung der Inhaltsstoffe der Beschichtung derart ist, daß deren Säurebeständigkeit, gemessen nach der Norm ASTM C724-91, nicht niedriger als 3 ist.

8. Verglasung nach einem der vorhergehenden Ansprüche, umfassend Bereiche, die mit einer Beschichtungsschicht bedeckt sind, deren Zusammensetzung derart ausgewählt ist, um die Rezyklisierung in Flachglas-Schmelzöfen zu gestatten, wobei die Fritte der Zusammensetzung der Beschichtung, in Gewichtsprozent der folgenden Inhaltsstoffe:
| | |
|---|---|
| SiO₂ | 35 bis 45% |
| B₂O₃ | 12 bis 20% |
| ZnO | 10 bis 16% |
| Na₂O | 0-12% |
| K₂O | 1-15% |
| Li₂O | 0-2% |
wobei die Summe Na₂O+K₂O+Li₂O 10 bis 15% beträgt,
| | |
|---|---|
| TiO₂ | 8 bis 18% |
| CaO | 0-2% |
| SrO | 0-1% |
| BaO | 0-5% |
wobei die Summe CaO+SrO+BaO 0,4 bis 5% beträgt, umfaßt.

9. Verglasung nach Anspruch 8, in der die Fritte, die ein Bestandteil der Zusammensetzung der Beschichtung ist, ebenfalls zumindest eine von Al₂O₃ in einem Gehalt von bis zu 3% und Bi₂O₃ in einem Gehalt bis zu 5%, bezogen auf das Gewicht, umfaßt.

10. Verglasung nach Anspruch 8 oder 9, in der die Fritte, die ein Bestandteil der Zusammensetzung der Beschichtung ist, nur jeden der folgenden Inhaltsstoffe in einem möglichst geringen Gehalt aufweist, wobei der Gesamtgehalt dieser Inhaltsstoffe nicht mehr als 2% des Gewichts der Fritte ausmacht: ZrO₂, Fe₂O₃, MnO,MgO,SnO₂, La₂O₃, CeO₂, P₂O₅, V₂O₅ und S.

11. Verglasung nach einem der Ansprüche 7 bis 10, in der die Zusammensetzung der Beschichtung im wesentlichen kein Fluor aufweist.

12. Verglasung nach einem der Ansprüche 7 bis 11, in der die Zusammensetzung der Beschichtung im wesentlichen kein Bi₂O₃ aufweist.

13. Verglasung nach einem der Ansprüche 7 bis 12, in der die Beschichtung im wesentlichen kein SnO₂ aufweist.

14. Verglasung nach einem der Ansprüche 7 bis 13, in der die Zusammensetzung der Beschichtung ebenfalls Pigmente, welche 10 bis 30 Gew.-% der Beschichtung ausmachen, umfaßt.

15. Verglasung nach Anspruch 14, in der die Pigmente auf Basis von Eisenoxid sind.

16. Verglasung nach Anspruch 15, in der die Pigmente Mischoxide von Eisen und Mangan umfassen.
